# EUROPEAN PATENT SPECIFICATION

(11) **EP 4 070 988 B1**
(45) Date of publication and mention of the grant of the patent: **12.06.2024**
(21) Application number: 20921057.4
(22) Date of filing: 24.09.2020
(51) Int. Cl.: B60N 2/28

(54) **ROTARY ADJUSTMENT MECHANISM AND SEAT**
DREHVERSTELLMECHANISMUS UND SITZ
MÉCANISME DE RÉGLAGE ROTATIF ET SIÈGE

(30) Priority: 26.02.2020 CN 202010122155
(43) Date of publication of application: 12.10.2022
(73) Proprietor: Max-Inf (Ningbo) Baby Product Co., Ltd, Ningbo, Zhejiang 315100 (CN)
(72) Inventor: LIU, Jianchun, Ningbo, Zhejiang 315000 (CN); TANG, Xiaobin, Ningbo, Zhejiang 315000 (CN); JI, Xuewei, Ningbo, Zhejiang 315000 (CN)
(74) Representative: Ipside
(86) International application number: PCT/CN2020/117429
(87) International publication number: WO 2021/169265

(56) References cited:
- EP-A1- 2 295 287
- WO-A1-2022/162125
- CN-A- 108 482 197
- CN-A- 109 228 977
- CN-U- 206 186 835
- CN-U- 208 069 470
- CN-U- 210 062 739
- CN-U- 211 468 231
- DE-U1-202014 103 298
- US-A1- 2017 320 406

## Description

### Technical Field

The present invention relates to the technical field of seats, in particular to a rotary adjustment mechanism and a seat.

### Background Art

By rotatably connecting a seat to a base, an orientation of the seat can be adjusted. For a child seat, not only the seat should be rotatable for adjustment, but also it should be ensured that the seat can be securely locked at a desired position. Usually, the seat is provided with a locking pin, while the base is provided with a locking hole. Although the seat can be locked by inserting the locking pin into the locking hole, the seat has poor stability and is inconvenient to operate.

Patent document EP2295287A1 disclosed a fixing base for a child's car seat comprising a main housing provided with translational guide means.

### Summary of the Invention

An object of the present invention is to provide a rotary adjustment mechanism and a seat, which can enhance stability of a rotating disc in a lock state, and can easily realize locking and unlocking.

In a first aspect, the rotary adjustment mechanism provided by the present invention includes: a first locking member, a second locking member, a rotating disc and a base, wherein
the rotating disc is rotatably connected to the base;
both the first locking member and the second locking member have a lock state in which the rotating disc is locked to the base and an unlock state in which the rotating disc is unlocked; and
the first locking member and the second locking member are interconnected for co-movement to synchronously switch between the lock state and the unlock state.

In accordance with the first aspect, the present invention provides a first possible embodiment of the first aspect, wherein, the first locking member is spaced apart from the second locking member, and the first locking member and the second locking member are respectively movably connected to the rotating disc.

In accordance with the first possible embodiment of the first aspect, the present invention provides a second possible embodiment of the first aspect, wherein, the first locking member includes a first locking hook, the second locking member includes a second locking hook, and the first locking hook and the second locking hook are respectively pivotally connected to the rotating disc;
a first locking piece and a second locking piece are connected to the base, and the first locking piece and the second locking piece are spaced apart; and
the first locking hook and the second locking hook are configured to cooperate with the first locking piece and the second locking piece, respectively.

In accordance with the second possible embodiment of the first aspect, the present invention provides a third possible embodiment of the first aspect, wherein orientations of openings of the first locking hook and the second locking hook are opposite to each other;
in the lock state, the first locking hook is fitted on one side of the first locking piece facing the second locking piece, and the second locking hook is fitted on one side of the second locking piece facing the first locking piece; and
from the lock state to the unlock state, the first locking hook and the second locking hook swing inwards respectively.

In accordance with the second possible embodiment of the first aspect, the present invention provides a fourth possible embodiment of the first aspect, wherein an unlocking member is movably connected to the rotating disc;
the unlocking member has a first position and a second position;
when the unlocking member is in the first position, both the first locking member and the second locking member are in the lock state; and
in the second position, both the first locking member and the second locking member are in the unlock state.

In accordance with the fourth possible embodiment of the first aspect, the present invention provides a fifth possible embodiment of the first aspect, wherein the first locking hook is provided with a first slot hole, and the second locking hook is provided with a second slot hole;
the unlocking member is provided with a first unlocking portion and a second unlocking portion, the first unlocking portion is inserted into the first slot hole, and the second unlocking portion is inserted into the second slot hole; and
the unlocking member moves between the first position and the second position, and causes the first unlocking portion to slide along the first slot hole, and the second unlocking portion to slide along the second slot hole.

In accordance with the fifth possible embodiment of the first aspect, the present invention provides a sixth possible embodiment of the first aspect, wherein the first slot hole includes: a first limiting portion and a first sliding groove portion communicating with the first limiting portion;
the second slot includes: a second limiting portion and a second sliding groove portion communicating with the second limiting portion;
when the unlocking member is in the first position, the first unlocking portion is fitted with the first limiting portion, and the second unlocking portion is fitted with the second limiting portion; and
when the unlocking member is in the second position, the first unlocking portion is fitted with the first sliding groove portion, and the second unlocking portion is fitted with the second sliding groove portion.

In accordance with the sixth possible embodiment of the first aspect, the present invention provides a seventh possible embodiment of the first aspect, wherein there is an angle between an extending direction of the first limiting portion and an extending direction of the first sliding groove portion, and there is an angle between an extending direction of the second limiting portion and an extending direction of the second sliding groove portion.

In accordance with the sixth possible embodiment of the first aspect, the present invention provides an eighth possible embodiment of the first aspect, wherein an elastic element is arranged between the unlocking element and the base, and the elastic element is configured such that the unlocking element has a tendency to move from the second position to the first position.

In the second aspect, a seat provided by the present invention includes: a seat body and the rotary adjustment mechanism provided by the first aspect, with the seat body mounted to the rotating disc.

The embodiments of the present invention have brought the following beneficial effects: by that the rotating disc is rotatably connected to the base, and both the first locking member and the second locking member have a lock state and an unlock state, in the lock state, the rotating disc is locked to the base, and in the unlock state, the rotating disc is unlocked, and the first locking member is in linkage with the second locking member to achieve synchronous switching between the lock state and the unlock state, which can improve operational convenience for locking and unlocking. Furthermore, the first locking member and the second locking member can jointly lock the rotating disc, thereby enhancing stability of the rotating disc in the lock state.

In order to make the above-mentioned objects, features and advantages of the present invention more obvious and easier to understand, preferred embodiments are given below, and are detailed as follows in conjunction with the accompanying drawings.

### Brief Description of the Drawings

In order to more clearly illustrate the technical solutions in specific embodiments of the present invention or related technologies, the accompanying drawings that need to be used in the descriptions of the specific embodiments or related technologies are briefly introduced in the following. Obviously, the drawings in the following description are some embodiments of the present invention, and for those of ordinary skill in the art, other drawings can also be obtained from these drawings without creative effort.
Fig. 1 is an exploded view of a rotary adjustment mechanism provided by an embodiment of the present invention;
Fig. 2 is a schematic diagram of a first locking member of a rotary adjustment mechanism provided by an embodiment of the present invention;
Fig. 3 is a schematic diagram of a second locking member of the rotary adjustment mechanism provided by an embodiment of the present invention;
Fig. 4 is a schematic diagram of the rotary adjustment mechanism provided by an embodiment of the present invention in a lock state;
Fig. 5 is a schematic diagram of the rotary adjustment mechanism provided by an embodiment of the present invention in an unlock state; and
Fig. 6 is a top view of a rotary adjustment mechanism provided by an embodiment of the present invention.

List of reference numerals: 1 DO-first locking member; 110-first slot hole; 111-first limiting portion; 112-first sliding groove portion; 200-second locking member; 210-second slot hole; 211-second limiting portion; 212-second sliding groove portion; 300-rotating disc; 400-base; 401-first locking piece; 402-second locking piece; 500-unlocking member; 501-first unlocking portion; 502-second unlocking portion; and 600-elastic element.

### Detailed Description of Embodiments

The technical solutions of the present invention will be clearly and fully described below with reference to the accompanying drawings. Obviously, the described embodiments are part of, but not all of, the embodiments of the present invention. Based on the embodiments of the present invention, all other embodiments obtained by a person of ordinary skill in the art without creative efforts shall fall within the scope of protection of the present invention.

In the description of the present invention, it should be noted that an orientation or positional relationship indicated by terms "center", "upper", "lower", "left", "right", "vertical", "horizontal", "inner", "outer" or the like is based on the orientation or positional relationship shown in the drawings, which is only for convenience of describing the present invention and simplifying the description, rather than indicating or implying that the referred device or element must have a particular orientation, be constructed and operated in a particular orientation, and therefore should not be construed as limiting the present invention. In addition, the terms "first", "second" and "third" are for descriptive purposes only and should not be construed as indicating or implying relative importance. The physical quantity in the formula, if not marked separately, should be understood as a basic quantity of a basic unit of The International System of Units, or a derived quantity derived from the basic quantity through mathematical operations such as multiplication, division, differentiation or integration.

In the description of the present invention, it should be noted that unless otherwise explicitly specified and defined, the terms "mounting", "connecting" and "connection" should be understood in a broad sense, for example, they may be a fixed connection, a detachable connection, or an integrated connection; they may be a mechanical connection or an electrical connection; and they may be a direct connection, an indirect connection by means of an intermediate medium, or internal communication between two elements. For those of ordinary skill in the art, the specific meanings of the terms mentioned above in the present invention should be construed according to specific circumstances.

### Embodiment I

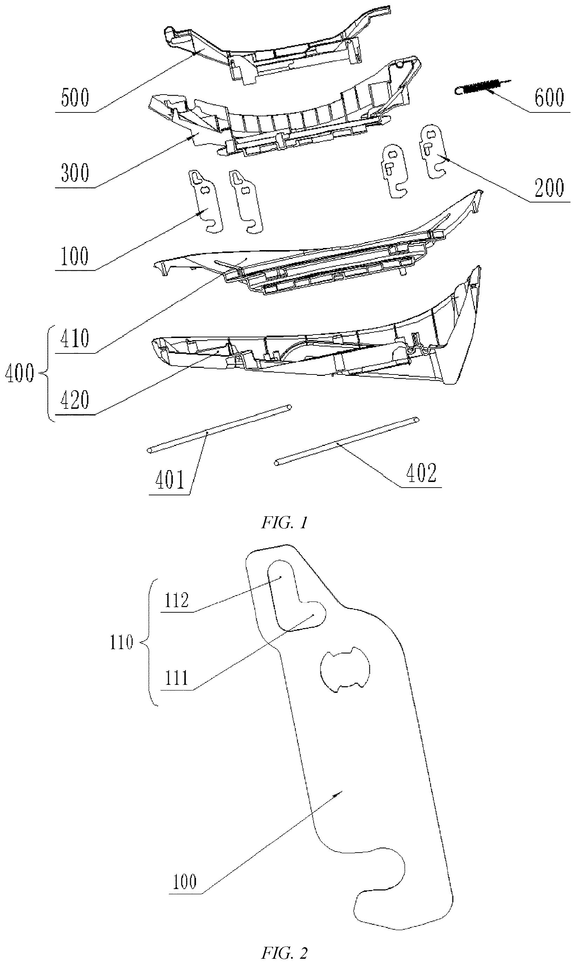

As shown in Fig. 1, a rotary adjustment mechanism provided by an embodiment of the present invention includes: a first locking member 100, a second locking member 200, a rotating disc 300 and a base 400, wherein the rotating disc 300 is rotatably connected to the base 400; both the first locking member 100 and the second locking member 200 have a lock state in which the rotating disc 300 is locked to the base 400 and an unlock state in which the rotating disc 300 is unlocked; and the first locking member 100 and the second locking member 200 are interconnected for co-movement to synchronously switch between the lock state and the unlock state.

Specifically, in the lock state, the first locking member 100 and the second locking member 200 co-act to lock the rotating disc 300, which can improve stability of the rotating disc 300 when it is locked. The first locking member 100 and the second locking member 200 are interconnected for co-movement to achieve locking or unlocking through synchronous manipulation.

In the embodiment of the present invention, the first locking member 100 and the second locking member 200 are spaced apart, and the first locking member 100 and the second locking member 200 are respectively movably connected to the rotating disc 300.

In some embodiments, one of the rotating disc 300 and the base 400 is connected to the first locking member 100 and the second locking member 200, and both the first locking member 100 and the second locking member 200 include a locking pin, the locking pin is slidably inserted into one of the rotating disc 300 and the base 400, and the other one of the rotating disc 300 and the base 400 is provided with a pin hole matching the locking pin, and the pin hole is spaced apart from a rotation axis of the rotating disc 300. The first locking member 100 is connected to the second locking member 200, and from the lock state to the unlock state, the two locking pins are pulled out from the pin holes at the same time, so that the rotating disc 300 can rotate freely; and from the unlock state to the lock state, the two locking pins are inserted into the two pin holes in one-to-one correspondence, thereby locking the rotating disc 300.

In the present embodiment, the first locking member 100 and the second locking member 200 are pivotally connected to the rotating disc 300 respectively, and the base 400 is provided with locking portions configured to cooperate with the first locking member 100 and the second locking member 200, respectively, the locking portion can be in form of a capture slot or a convex block, and when the first locking member 100 and the second locking member 200 are respectively fitted to the locking portion, the rotating disc 300 is locked; and when the first locking member 100 and the second locking member 200 respectively swing to disengage from the locking portion, the rotating disc 300 can rotate freely.

Further, the first locking member 100 includes a first locking hook, the second locking member 200 includes a second locking hook, and the first locking hook and the second locking hook are respectively pivotally connected to the rotating disc 300; the base 400 is connected with a first locking piece 401 and a second locking piece 402, and the first locking piece 401 and the second locking piece 402 are spaced apart; and the first locking hook and the second locking hook are configured to cooperate with the first locking piece 401 and the second locking piece 402, respectively.

Specifically, both the first locking piece 401 and the second locking piece 402 include a rod connected to the base 400; and with respect to the rotation axis of the rotating disc 300, a central angle corresponding to the first locking piece 401 and the second locking piece 402 is 180 degrees. From a state in which the first locking hook is fitted with the first locking piece 401 and the second locking hook is fitted with the second locking piece 402, it switches to a state in which the first locking hook is fitted with the second locking piece 402 and the second locking hook is fitted with the first locking piece 401. That is: Each time the rotating disc 300 rotates by 180 degrees, it can go from one locked position to another locked position, so that both the first locking member 100 and the second locking member 200 are switched from the unlock state to the lock state.

In some embodiments, there are a plurality of first locking pieces 401 and second locking pieces 402, and the first locking pieces 401 and the second locking pieces 402 are spaced apart around the rotation axis of the rotating disc 300. When the rotating disc 300 rotates around the rotation axis, the first locking hook is fitted with one of the first locking piece 401 and the second locking piece 402, and the second locking hook is fitted with the other one of the first locking piece 401 and the second locking piece 402, so that the rotating disc 300 can be locked.

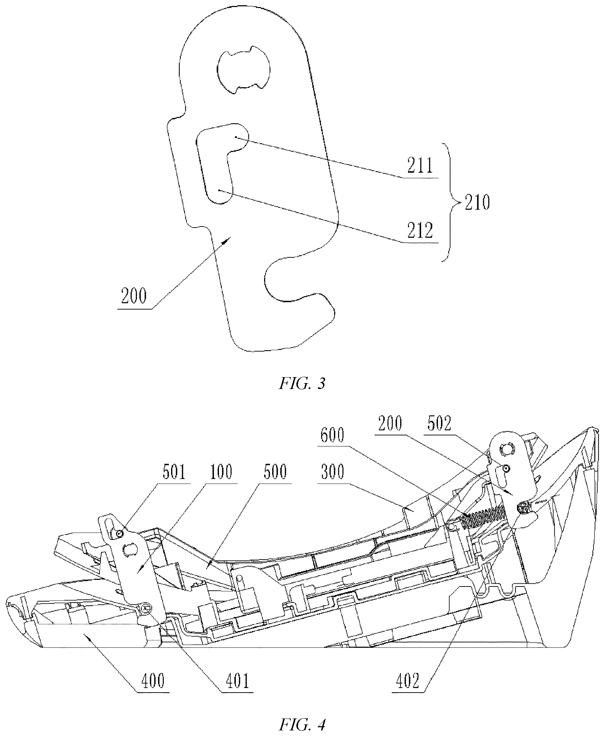

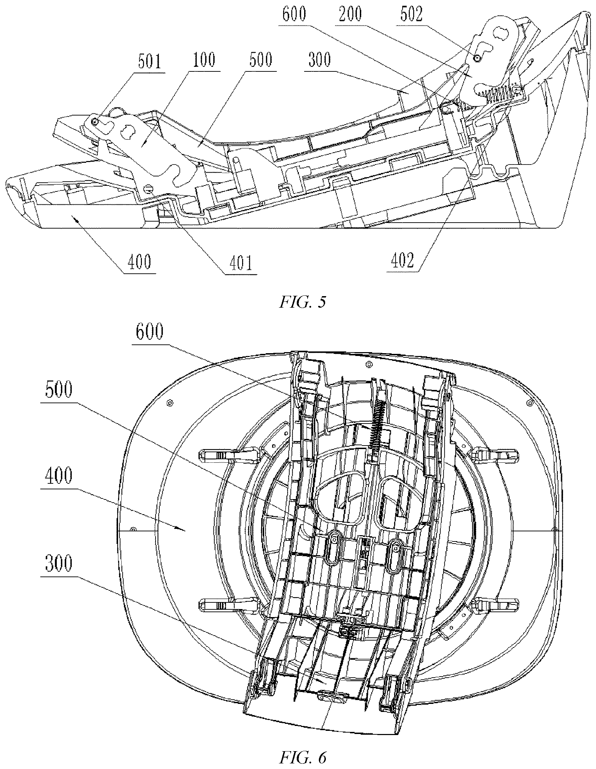

As shown in Figs. 1, 4 and 5, orientations of openings of the first locking hook and the second locking hook are opposite to each other; in the lock state, the first locking hook is fitted on one side of the first locking piece 401 facing the second locking piece 402, and the second locking hook is fitted on one side of the second locking piece 402 facing the first locking piece 401; and from the lock state to the unlock state, the first locking hook and the second locking hook swing inwards respectively.

In the lock state, the first locking hook and the second locking hook abut against the inner side of the first locking piece 401 and the second locking piece 402 in one-to-one correspondence, so that the first locking hook and the second locking hook are respectively firmly fitted with the base 400 to improve stability of the rotating disc 300 in the lock state. From the lock state to the unlock state, the first locking hook and the second locking hook swing inwards respectively, which can reduce the space occupied by the first locking hook and the second locking hook in a radial direction of the rotating disc 300 in the unlock state. Compared with the first locking hook and the second locking hook swinging outward to achieve unlocked, the dimension and space required for arranging the first locking hook and the second locking hook can be reduced, thereby making a structure of the rotary adjustment mechanism more compact.

As shown in Figs. 1, 4, 5 and 6, an unlocking member 500 is movably connected to the rotating disc 300; the unlocking member 500 has a first position and a second position; when the unlocking member 500 is in the first position, both the first locking member 100 and the second locking member 200 are in the lock state; and in the second position, both the first locking member 100 and the second locking member 200 are in the unlock state.

In some embodiments, both the first locking member 100 and the second locking member 200 use locking pins, the unlocking member 500 is connected to the first locking member 100 and the second locking member 200, and by operating the unlocking member 500, two locking pins can be pluggable at the same time, thereby realizing synchronous unlocking or locking.

In this embodiment, the first locking member 100 includes a first locking hook, the second locking member 200 includes a second locking hook, the first locking hook and the second locking hook are interconnected for co-movement to cooperate with the unlocking member 500, and the unlocking member 500 can drive the first locking hook and the second locking hook to swing at the same time, thereby realizing synchronous unlocking or locking.

As shown in Figs. 1, 2, 3, 4 and 5, the first locking hook is provided with a first slot hole 110, and the second locking hook is provided with a second slot hole 210; the unlocking member 500 is provided with a first unlocking portion 501 and a second unlocking portion 502, the first unlocking portion 501 is inserted in the first slot hole 110, and the second unlocking portion 502 is inserted in the second slot hole 210; and the unlocking member 500 moves between the first position and the second position, and causes the first unlocking portion 501 to slide along the first slot hole 110 and the second unlocking portion 502 to slide along the second slot hole 210.

Specifically, the unlocking member 500 is slidably connected to the rotating disc 300, and a sliding direction of the unlocking member 500 has an angle with the rotation axis of the rotating disc 300, and the angle can be configured as 60 degrees, 70 degrees, 90 degrees or 100 degrees. When the unlocking member 500 moves between the first position and the second position, the first unlocking portion 501 slides along the first slot hole 110, the second unlocking portion 502 slides along the second slot hole 210, the first locking member 100 is driven to swing by the first unlocking portion 501, and the second locking member 200 is driven to swing by the second unlocking portion 502.

In one embodiment, the first locking hook is provided with a first shaft hole, and a first hinge shaft connecting the rotating disc 300 is inserted into the first shaft hole to pivotally connect the first locking hook to the rotating disc 300. The second locking hook is provided with a second shaft hole, and a second hinge shaft connecting the rotating disc 300 is inserted into the second shaft hole to pivotally connect the second locking hook to the rotating disc 300. The first shaft hole is located between the first slot hole 110 and a groove of the first locking hook, and the second slot hole 210 is located between the second shaft hole and a groove of the second locking hook. When the unlocking member 500 slides relative to the rotating disc 300, the first unlocking portion 501 drives the first locking hook to swing, the second unlocking portion 502 drives the second locking hook to swing, and the swing direction of the first locking hook is opposite to the swing direction of the second locking hook.

Further, the first slot hole 110 includes: a first limiting portion 111 and a first sliding groove portion 112 communicating with the first limiting portion 111; the second slot 210 includes: a second limiting portion 211 and a second sliding groove portion 212 communicating with the second limiting portion 211; when the unlocking member 500 is in the first position, the first unlocking portion 501 is fitted with the first limiting portion 111, and the second unlocking portion 502 is fitted with the second limiting portion 211; and when the unlocking member 500 is in the second position, the first unlocking portion 501 is fitted with the first sliding groove portion 112, and the second unlocking portion 502 is fitted with the second sliding groove portion 212.

In some embodiments, extending directions of the first limiting portion 111 and the first sliding groove portion 112 are the same, and a width dimension of the first limiting portion 111 is smaller than that of the first sliding groove portion 112. When the first unlocking portion 501 slides along the first sliding groove portion 112, the first sliding groove portion 112 plays a guiding role, and it should be avoided that the first unlocking portion 501 is stuck due to smaller width of the first sliding groove portion 112. In the lock state, the unlocking member 500 is in the second position, the first unlocking portion 501 slides to the first limiting portion 111, and the first limiting portion 111 can clamp the first unlocking portion 501, so as to ensure that the first unlocking portion 501 is not loose, thereby improving stability of the rotary adjustment mechanism in the lock state. Similarly, extending directions of the second limiting portion 211 and the second sliding groove portion 212 are the same, and a width dimension of the second limiting portion 211 is smaller than that of the second sliding groove portion 212. When the second unlocking portion 502 slides along the second sliding groove portion 212, the second sliding groove portion 212 plays a guiding role, and it should be avoided that the second unlocking portion 502 is stuck due to smaller width of the second sliding groove portion 212. When the unlocking member 500 is in the second position, the second unlocking portion 502 slides to the second limiting portion 211, and the second limiting portion 211 can clamp the second unlocking portion 502, so as to ensure that the second unlocking portion 502 is not loose, thereby improving stability of the rotary adjustment mechanism in the lock state.

In this embodiment, there is an angle between an extending direction of the first limiting portion 111 and an extending direction of the first sliding groove portion 112, and there is an angle between an extending direction of the second limiting portion 211 and an extending direction of the second sliding groove portion 212. Here, the angle between the extending direction of the first limiting portion 111 and the extending direction of the first sliding groove portion 112 can be configured as 90 degrees, and the angle between the extending direction of the second limiting portion 211 and the extending direction of the second sliding groove portion 212 may be configured as 90 degrees.

Specifically, when the unlocking member 500 slides relative to the rotating disc 300, the first unlocking portion 501 slides along the first sliding groove portion 112, and the second unlocking portion 502 slides along the second sliding groove portion 212. In the lock state, the first unlocking portion 501 is fitted with the first limiting portion 111, and the second unlocking portion 502 is fitted with the second limiting portion 211. The first limiting portion 111 can prevent the first unlocking portion 501 from loosening and entering the first sliding groove portion 112, and the second limiting portion 211 can prevent the second unlocking portion 502 from loosening and entering the second sliding groove portion 212, thereby improving stability of the rotary adjustment mechanism in the lock state. It should be noted that, from the second position to the first position, the unlocking member 500 slides in the first direction. The first limiting portion 111 extends along the first direction from an end communicating with the first sliding groove portion 112 to an end away from the first sliding groove portion 112; and the second limiting portion 211 extends along the first direction from an end communicating with the second sliding groove portion 212 to an end away from the second sliding groove portion 212. During the process of sliding the unlocking member 500 from the first position to the second position, the unlocking member 500 slides in a direction opposite to the first direction, so that the first unlocking portion 501 can slide from the first limiting portion 111 to the first sliding groove portion 112, and the second unlocking portion 502 can slide from the second limiting portion 211 to the second sliding groove portion 212, which can prevent the first unlocking portion 501 and the second unlocking portion 502 from being stuck during the unlocking process.

As shown in Figs. 1, 4, 5 and 6, an elastic element 600 is disposed between the unlocking member 500 and the base 400, and the elastic member 600 is configured so that the unlocking member 500 has a tendency to move from the second position to the first position. Here, the elastic element 600 includes a spring, one end of the elastic element 600 is connected to the unlocking member 500, and the other end of the elastic element 600 is connected to the base 400. Manual operation can move the unlocking member 500 from the first position to the second position. When the unlocking member 500 is unlocked, the unlocking member 500 moves from the second position to the first position under the action of the elastic element 600. One of the unlocking member 500 and the rotating disc 300 is provided with a sliding groove, and the other one is provided with a slider matching the sliding groove. When the unlocking member 500 moves between the first position and the second position, the slider slides along the sliding groove, thereby preventing the unlocking member 500 from being deflected or loosening.

In this embodiment, the elastic element 600 is a tension spring, one end of the tension spring is connected to the unlocking member 500, and the other end of the tension spring is connected to the base 400. When the unlocking member 500 moves from the first position to the second position, the tension spring is elastically deformed and elongated, so that the unlocking member 500 has a tendency to move from the second position to the first position.

### Embodiment II

As shown in Fig. 1, a seat provided by the embodiment of the present invention includes: a seat body and the rotary adjustment mechanism provided by the first embodiment, with the seat body mounted to the rotating disc 300. When both the first locking member 100 and the second locking member 200 are in the unlock state, the seat body and the rotating disc 300 can be rotated synchronously, thereby adjusting an orientation of the seat body. When both the first locking member 100 and the second locking member 200 are in the lock state, the rotating disc 300 is locked, so that the orientation of the seat body can be fixed. The seat provided by this embodiment has the same technical effect as the rotary adjustment mechanism, so it is not repeated here.

Finally, it should be noted that the above embodiments are only used to illustrate the technical solutions of the present invention, but not to limit them; although the present invention has been described in detail with reference to the foregoing embodiments, those of ordinary skill in the art should understand that: it is still possible to modify the technical solutions recorded in the foregoing embodiments, or perform equivalent substitutions for some or all of the technical features; however, these modifications or substitutions do not make the essence of the corresponding technical solutions deviate from the scope of the technical solutions of the embodiments of the present invention.

## Claims

1. A rotary adjustment mechanism, **characterized by** comprising: a first locking member (100), a second locking member (200), a rotating disc (300) and a base (400), wherein
the rotating disc (300) is rotatably connected to the base (400);
both the first locking member (100) and the second locking member (200) have a lock state in which the rotating disc (300) is locked to the base (400) and an unlock state in which the rotating disc (300) is unlocked; and
the first locking member (100) and the second locking member (200) are interconnected for co-movement to synchronously switch between the lock state and the unlock state;
the first locking member (100) is spaced apart from the second locking member (200), **characterized in that** the first locking member (100) comprises a first locking hook, the second locking member (200) comprises a second locking hook, and the first locking hook and the second locking hook are respectively pivotally connected to the rotating disc (300);
a first locking piece (401) and a second locking piece (402) are connected to the base (400), and the first locking piece (401) and the second locking piece (402) are spaced apart; and the first locking hook and the second locking hook are configured to cooperate with the first locking piece (401) and the second locking piece (402), respectively.

2. The rotary adjustment mechanism according to claim 1, **characterized in that** orientations of openings of the first locking hook and the second locking hook are opposite to each other;
in the lock state, the first locking hook is fitted on one side of the first locking piece (401) facing the second locking piece (402), and the second locking hook is fitted on one side of the second locking piece (402) facing the first locking piece (401); and
from the lock state to the unlock state, the first locking hook and the second locking hook swing inwards respectively.

3. The rotary adjustment mechanism according to claim 1, **characterized in that** an unlocking member (500) is movably connected to the rotating disc (300);
the unlocking member (500) has a first position and a second position;
when the unlocking member (500) is in the first position, both the first locking member (100) and the second locking member (200) are in the lock state; and
in the second position, both the first locking member (100) and the second locking member (200) are in the unlock state.

4. The rotary adjustment mechanism according to claim 3, **characterized in that** the first locking hook is provided with a first slot hole (110), and the second locking hook is provided with a second slot hole (210);
the unlocking member (500) is provided with a first unlocking portion (501) and a second unlocking portion (502), the first unlocking portion (501) is inserted into the first slot hole (110), and the second unlocking portion (502) is inserted into the second slot hole (210); and
the unlocking member (500) moves between the first position and the second position, and causes the first unlocking portion (501) to slide along the first slot hole (110) and the second unlocking portion (502) to slide along the second slot hole (210).

5. The rotary adjustment mechanism according to claim 4, **characterized in that** the first slot hole (110) comprises: a first limiting portion (111) and a first sliding groove portion (112) communicating with the first limiting portion (111);
the second slot (210) comprises: a second limiting portion (211) and a second sliding groove portion (212) communicating with the second limiting portion (211);
when the unlocking member (500) is in the first position, the first unlocking portion (501) is fitted with the first limiting portion (111), and the second unlocking portion (502) is fitted with the second limiting portion (211); and
when the unlocking member (500) is in the second position, the first unlocking portion (501) is fitted with the first sliding groove portion (112), and the second unlocking portion (502) is fitted with the second sliding groove portion (212).

6. The rotary adjustment mechanism according to claim 5, **characterized in that** there is an angle between an extending direction of the first limiting portion (111) and an extending direction of the first sliding groove portion (112), and there is an angle between an extending direction of the second limiting portion (211) and an extending direction of the second sliding groove portion (212).

7. The rotary adjustment mechanism according to claim 5, **characterized in that** an elastic element (600) is arranged between the unlocking member (500) and the base (400), and the elastic element (600) is configured such that the unlocking member (500) has a tendency to move from the second position to the first position.

8. A seat, **characterized by** comprising: a seat body and the rotary adjustment mechanism according to any one of claims 1-7, the seat body being mounted to the rotating disc (300).

## Patentansprüche

1. Drehverstellmechanismus, **dadurch gekennzeichnet, dass** er Folgendes umfasst: ein erstes Verriegelungselement (100), ein zweites Verriegelungselement (200), eine Drehscheibe (300) und eine Basis (400), wobei die Drehscheibe (300) drehbar mit der Basis (400) verbunden ist;
sowohl das erste Verriegelungselement (100) als auch das zweite Verriegelungselement (200) einen Verriegelungszustand, in dem die Drehscheibe (300) an der Basis (400) verriegelt ist, und einen Entriegelungszustand aufweisen, in dem die Drehscheibe (300) entriegelt ist; und
das erste Verriegelungselement (100) und das zweite Verriegelungselement (200) für eine gemeinsame Bewegung miteinander verbunden sind, um synchron zwischen dem Verriegelungszustand und dem Entriegelungszustand umzuschalten;
das erste Verriegelungselement (100) vom zweiten Verriegelungselement (200) beabstandet ist, **dadurch gekennzeichnet**, das erste Verriegelungselement (100) einen ersten Verriegelungshaken umfasst, das zweite Verriegelungselement (200) einen zweiten Verriegelungshaken umfasst, und der erste Verriegelungshaken und der zweite Verriegelungshaken jeweils schwenkbar mit der Drehscheibe (300) verbunden sind;
dass ein erstes Verriegelungsstück (401) und ein zweites Verriegelungsstück (402) mit der Basis (400) verbunden sind, und das erste Verriegelungsstück (401) und das zweite Verriegelungsstück (402) voneinander beabstandet sind; und
der erste Verriegelungshaken und der zweite Verriegelungshaken dazu konfiguriert sind, jeweils mit dem ersten Verriegelungsstück (401) und dem zweiten Verriegelungsstück (402) zusammenzuwirken.

2. Drehverstellmechanismus nach Anspruch 1, **dadurch gekennzeichnet, dass** die Ausrichtungen der Öffnungen des ersten Verriegelungshakens und des zweiten Verriegelungshakens einander entgegengesetzt sind;
der erste Verriegelungshaken im Verriegelungszustand auf einer Seite des ersten Verriegelungsstücks (401), die dem zweiten Verriegelungsstück (402) zugewandt ist, angebracht ist und der zweite Verriegelungshaken auf einer Seite des ersten Verriegelungsstücks (401), die dem zweiten Verriegelungsstück (402) zugewandt ist, angebracht ist; und
der erste Verriegelungshaken und der zweite Verriegelungshaken vom Verriegelungszustand in den Entriegelungszustand jeweils nach innen klappen.

3. Drehverstellmechanismus nach Anspruch 1, **dadurch gekennzeichnet, dass** ein Entriegelungselement (500) beweglich mit der Drehscheibe (300) verbunden ist;
das Entriegelungselement (500) eine erste Position und eine zweite Position aufweist;
wenn sich das Entriegelungselement (500) in der ersten Position befindet, sich sowohl das erste Verriegelungselement (100) als auch das zweite Verriegelungselement (200) im Verriegelungszustand befinden; und
sich sowohl das erste Verriegelungselement (100) als auch das zweite Verriegelungselement (200) in der zweiten Position im Entriegelungszustand befinden.

4. Drehverstellmechanismus nach Anspruch 3, **dadurch gekennzeichnet, dass** der erste Verriegelungshaken mit einem ersten Langloch (110) versehen ist, und der zweite Verriegelungshaken mit einem zweiten Langloch (210) versehen ist;
das Entriegelungselement (500) mit einem ersten Entriegelungsabschnitt (501) und einem zweiten Entriegelungsabschnitt (502) versehen ist, der erste Entriegelungsabschnitt (501) in das erste Langloch (110) eingeführt ist, und der zweite Entriegelungsabschnitt (502) in das zweite Langloch (210) eingeführt ist; und
das Entriegelungselement (500) sich zwischen der ersten Position und der zweiten Position bewegt und bewirkt, dass der erste Entriegelungsabschnitt (501) entlang des ersten Langlochs (110) gleitet und der zweite Entriegelungsabschnitt (502) entlang des zweiten Langlochs (210) gleitet.

5. Drehverstellmechanismus nach Anspruch 4, **dadurch gekennzeichnet, dass** das erste Langloch (110) Folgendes umfasst: einen ersten Begrenzungsabschnitt (111) und einen ersten Gleitnutabschnitt (112), der mit dem ersten Begrenzungsabschnitt (111) in Verbindung steht;
der zweite Schlitz (210) Folgendes umfasst: einen zweiten Begrenzungsabschnitt (211) und einen zweiten Gleitnutabschnitt (212), der mit dem zweiten Begrenzungsabschnitt (211) in Verbindung steht;
wenn sich das Entriegelungselement (500) in der ersten Position befindet, der erste Entriegelungsabschnitt (501) mit dem ersten Begrenzungsabschnitt (111) ausgestattet ist und der zweite Entriegelungsabschnitt (502) mit dem zweiten Begrenzungsabschnitt (211) ausgestattet ist; und
wenn sich das Entriegelungselement (500) in der zweiten Position befindet, der erste Entriegelungsabschnitt (501) mit dem ersten Gleitnutabschnitt (112) ausgestattet ist und der zweite Entriegelungsabschnitt (502) mit dem zweiten Gleitnutabschnitt (212) ausgestattet ist.

6. Drehverstellmechanismus nach Anspruch 5, **dadurch gekennzeichnet, dass** zwischen einer Erstreckungsrichtung des ersten Begrenzungsabschnitts (111) und einer Erstreckungsrichtung des ersten Gleitnutabschnitts (112) ein Winkel vorhanden ist, und zwischen einer Erstreckungsrichtung des zweiten Begrenzungsabschnitts (211) und einer Erstreckungsrichtung des zweiten Gleitnutabschnitts (212) ein Winkel vorhanden ist.

7. Drehverstellmechanismus nach Anspruch 5, **dadurch gekennzeichnet, dass** ein elastisches Element (600) zwischen dem Entriegelungselement (500) und der Basis (400) angeordnet ist, und das elastische Element (600) derart konfiguriert ist, dass das Entriegelungselement (500) dazu neigt, sich von der zweiten Position in die erste Position zu bewegen.

8. Sitz, **dadurch gekennzeichnet, dass** er Folgendes umfasst: einen Sitzkörper und den Drehverstellmechanismus nach einem der Ansprüche 1-7, wobei der Sitzkörper an der Drehscheibe (300) montiert ist.

## Revendications

1. Mécanisme de réglage rotatif, **caractérisé en ce qu'**il comprend : un premier élément de verrouillage (100), un deuxième élément de verrouillage (200), un disque rotatif (300) et une base (400), dans lequel le disque rotatif (300) est relié de manière rotative à la base (400) ;
à la fois le premier élément de verrouillage (100) et le deuxième élément de verrouillage (200) présentent un état de verrouillage dans lequel le disque rotatif (300) est verrouillé à la base (400) et un état de déverrouillage dans lequel le disque rotatif (300) est déverrouillé ; et le premier élément de verrouillage (100) et le deuxième élément de verrouillage (200) sont interconnectés pour un co-mouvement pour basculer de manière synchrone entre l'état de verrouillage et l'état de déverrouillage ;
le premier élément de verrouillage (100) est espacé du deuxième élément de verrouillage (200), **caractérisé en ce que** le premier élément de verrouillage (100) comprend un premier crochet de verrouillage, le deuxième élément de verrouillage (200) comprend un deuxième crochet de verrouillage, et le premier crochet de verrouillage et le deuxième crochet de verrouillage sont respectivement reliés de manière pivotante au disque rotatif (300) ;
une première pièce de verrouillage (401) et une deuxième pièce de verrouillage (402) sont reliées à la base (400), et la première pièce de verrouillage (401) et la deuxième pièce de verrouillage (402) sont espacées l'une de l'autre ; et
le premier crochet de verrouillage et le deuxième crochet de verrouillage sont configurés pour coopérer avec la première pièce de verrouillage (401) et la deuxième pièce de verrouillage (402), respectivement.

2. Mécanisme de réglage rotatif selon la revendication 1, **caractérisé en ce que** les orientations d'ouvertures du premier crochet de verrouillage et du deuxième crochet de verrouillage sont opposées l'une à l'autre ;
dans l'état de verrouillage, le premier crochet de verrouillage est monté sur un côté de la première pièce de verrouillage (401) tourné vers la deuxième pièce de verrouillage (402), et le deuxième crochet de verrouillage est monté sur un côté de la deuxième pièce de verrouillage (402) tourné vers la première pièce de verrouillage (401) ; et
à partir de l'état de verrouillage vers l'état de déverrouillage, le premier crochet de verrouillage et le deuxième crochet de verrouillage oscillent vers l'intérieur respectivement.

3. Mécanisme de réglage rotatif selon la revendication 1, **caractérisé en ce qu'**un élément de déverrouillage (500) est relié de manière mobile au disque rotatif (300) ; l'élément de déverrouillage (500) présente une première position et une deuxième position ;
lorsque l'élément de déverrouillage (500) est dans la première position, à la fois le premier élément de verrouillage (100) et le deuxième élément de verrouillage (200) sont dans l'état de verrouillage ; et
dans la deuxième position, à la fois le premier élément de verrouillage (100) et le deuxième élément de verrouillage (200) sont dans l'état de déverrouillage.

4. Mécanisme de réglage rotatif selon la revendication 3, **caractérisé en ce que** le premier crochet de verrouillage est doté d'un premier trou oblong (110), et le deuxième crochet de verrouillage est doté d'un deuxième trou oblong (210) ;
l'élément de déverrouillage (500) est doté d'une première partie de déverrouillage (501) et d'une deuxième partie de déverrouillage (502), la première partie de déverrouillage (501) est insérée dans le premier trou oblong (110), et la deuxième partie de déverrouillage (502) est insérée dans le deuxième trou oblong (210) ; et
l'élément de déverrouillage (500) se déplace entre la première position et la deuxième position, et amène la première partie de déverrouillage (501) à glisser le long du premier trou oblong (110) et la deuxième partie de déverrouillage (502) à glisser le long du deuxième trou oblong (210).

5. Mécanisme de réglage rotatif selon la revendication 4, **caractérisé en ce que** le premier trou oblong (110) comprend : une première partie de limitation (111) et une première partie de rainure de glissement (112) communiquant avec la première partie de limitation (111) ;
la deuxième fente (210) comprend : une deuxième partie de limitation (211) et une deuxième partie de rainure de glissement (212) communiquant avec la deuxième partie de limitation (211) ;
lorsque l'élément de déverrouillage (500) est dans la première position, la première partie de déverrouillage (501) est équipée de la première partie de limitation (111), et la deuxième partie de déverrouillage (502) est équipée de la deuxième partie de limitation (211) ; et
lorsque l'élément de déverrouillage (500) est dans la deuxième position, la première partie de déverrouillage (501) est équipée de la première partie de rainure de glissement (112), et la deuxième partie de déverrouillage (502) est équipée de la deuxième partie de rainure de glissement (212).

6. Mécanisme de réglage rotatif selon la revendication 5, **caractérisé en ce qu'**il y a un angle entre une direction d'étendue de la première partie de limitation (111) et une direction d'étendue de la première partie de rainure de glissement (112), et il y a un angle entre une direction d'étendue de la deuxième partie de limitation (211) et une direction d'étendue de la deuxième partie de rainure de glissement (212).

7. Mécanisme de réglage rotatif selon la revendication 5, **caractérisé en ce qu'**un élément élastique (600) est agencé entre l'élément de déverrouillage (500) et la base (400), et l'élément élastique (600) est configuré de telle sorte que l'élément de déverrouillage (500) présente une tendance à se déplacer à partir de la deuxième position vers la première position.

8. Siège, **caractérisé en ce qu'**il comprend : un corps de siège et le mécanisme de réglage rotatif selon l'une quelconque des revendications 1-7, le corps de siège étant monté sur le disque rotatif (300).
